# EUROPÄISCHE PATENTSCHRIFT

(11) **EP 0 935 198 B1**
(45) Veröffentlichungstag und Bekanntmachung des Hinweises auf die Patenterteilung: **04.07.2001**
(21) Anmeldenummer: 99100421.9
(22) Anmeldetag: 11.01.1999
(51) Int. Cl.: G06F 11/16, G06F 11/18

(54) **Verfahren zur sicheren Datenverarbeitung sowie ein Rechnersystem**
Secure data processing method and computer system
Méthode et système informatique de traitement de données sécurisée

(30) Priorität: 05.02.1998 CH 28498
(43) Veröffentlichungstag der Anmeldung: 11.08.1999
(73) Patentinhaber: Siemens Schweiz AG (Siemens Suisse SA) (Siemens Svizzera SA) Siemens Switzerland Ltd), 8047 Zürich (CH)
(72) Erfinder: Germann, Stephan, 8322 Madetswil (CH); Gutknecht, Roland, 8352 Elsau (CH); Zünd, Urs, 8307 Effretikon (CH)
(74) Vertreter: Zedlitz, Peter, Dipl.-Inf.

(56) Entgegenhaltungen:
- DE-A- 2 415 307
- US-A- 4 733 353
- DAVIES D ET AL: "SYNCHRONIZATION AND MATCHING IN REDUNDANT SYSTEMS" IEEE TRANSACTIONS ON COMPUTERS, Bd. C-27, Nr. 6, Juni 1978, Seiten 531-539, XP002041652

## Beschreibung

Die vorliegende Erfindung betrifft ein Verfahren und ein Rechnersystem zur sicheren Datenverarbeitung nach dem Oberbegriff des Patentanspruchs 1 bzw.10.

In verschiedenen Anwendungsbereichen werden Rechnersysteme benötigt, die eine erhöhte Betriebssicherheit bzw. Fehlertoleranz aufweisen. Dies wird bei verschiedenen Rechnerarchitekturen durch Verwendung redundanter Hardwarekanäle bzw. Module erzielt, in denen die zugeführten Daten unabhängig voneinander verarbeitet und die daraus resultierenden Ergebnisse miteinander verglichen werden. Beim Ausfall eines Moduls bleibt dadurch die Funktionsfähigkeit des Rechnersystems gewährleistet. Oft werden Rechnerarchitekturen mit drei redundanten Modulen verwendet, von denen jeweils wenigstens zwei übereinstimmende Arbeitsergebnisse liefern müssen.

Bekannt sind Rechnersysteme mit mehreren redundanten Modulen, die synchron getaktet werden. Verschiedene Methoden zur Synchronisation von Systemen mit redundanten Modulen sind z.B. in [1] beschrieben. Da bei synchroner Verarbeitung aufgrund des gemeinsamen Taktsignals keine genügende Fehlertoleranz erzielt werden kann, werden vorzugsweise Systeme mit mehreren redundanten Kanälen verwendet, die asynchron laufen. Gemäss [2], Seite 776 (Kapitel 4.3 Asynchronous Multichannel Systems) werden von den asynchron laufenden Modulen jedoch nur dann identische Ausgangssignale abgegeben, wenn alle Module anhand identischer Eingangssignale dieselben Kalkulationen ungefähr zu gleicher Zeit ausführen. Im Zusammenhang mit diesen Systemen wird nachstehend von plesiochroner Datenverarbeitung in mehreren redundanten Modulen gesprochen.

In [5] ist ein Verfahren zur Synchronisation der Ausgaben beschrieben, bei dem die Prozessdaten nur zu diskreten Zeitpunkten zu den redundanten Einheiten durchgeschaltet werden, wobei eine solche Durchschaltung nur dann vorgenommen wird, wenn alle Einheiten die mit der vorangehenden Durchschaltung eingegebenen Prozessdaten abgearbeitet haben.

Zur Vermeidung von Fehlern müssen die plesiochronen Arbeitszyklen in den redundanten Modulen punktuell derart synchronisiert werden, dass die redundanten Module bei zeitkritischen Vorgängen dieselbe virtuelle Zeit aufweisen (siehe [1], Spalte 21, Zeilen 48 - 88). In [1] wird dazu jeder Arbeitszyklus beim Auftreten eines Interrupts auf eine gemeinsame virtuelle Zeit synchronisiert (siehe [1], Spalte 22, Zeilen 53 - 68), wonach Daten aus einem Speicher gleichzeitig an die redundanten Module übertragen werden. Das Vorliegen der Interrupts von allen redundanten Modulen wird durch einen Voter (siehe [1], Spalte 22, Zeile 66, Pos. 136) geprüft. Ferner werden die aus den parallelen Arbeitszyklen resultierenden Ergebnisse miteinander verglichen, wonach die in der Mehrheit vorliegenden Ergebnisse z.B. zu einem externen Speicher übertragen werden. Dies geschieht in [1] durch einen weiteren Voter (siehe [1], Spalte 17, z.B. Zeilen 39 ff.). Durch die Verwendung von Interrupts zum zeitlichen Abgleich der redundanten Module wird die obenerwähnte Forderung erfüllt, gemäss der in den redundanten Modulen dieselben Kalkulationen ungefähr zu gleicher Zeit ausgeführt werden sollen.

In [2], Seite 776 ist jedoch weiter ausgeführt, dass ein externes Ereignis auch bei mehrkanaligen Systemen mit fast asynchroner bzw. plesiochroner Datenverarbeitung zu denselben Fehlern in den redundanten Modulen führen kann (z.B. wird durch den Einfluss eines Blitzschlags in zwei von drei Kanälen ein Datenbit invertiert). Von den redundanten Modulen werden daher unter Umständen in der Mehrheit identische, jedoch falsche Ausgangssignale abgegeben, was von der Vergleichsschaltung (Voter) nicht entdeckt wird, da lediglich geprüft wird, ob z.B. wenigstens zwei von drei redundanten Modulen dieselben Ausgangssignale abgeben. Als Lösung dieses Problems ist in [2], Seite 776 eine voneinander vollständig unabhängige Datenverarbeitung in den redundanten Modulen angegeben. Vorgesehen sind ungleiche Eingangssignale, ungleiche Ausgangssignale und vorzugsweise sogar unterschiedliche Algorithmen. Ein zur Realisierung dieser Lösung angegebenes Verfahren ist mit hohem Aufwand verbunden.

Der vorliegenden Erfindung liegt daher die Aufgabe zugrunde, ein mit geringem Aufwand realisierbares Verfahren zur sicheren Datenverarbeitung in Rechnersystemen mit mehreren redundanten Modulen sowie ein entsprechendes Rechnersystem anzugeben.

Diese Aufgabe wird durch die im des Patentanspruchs 1 bzw. 10 angegebenen Massnahmen gelöst. Vorteilhafte Ausgestaltungen der Erfindung sind in weiteren Ansprüchen angegeben.

Für das erfindungsgemässe Verfahren werden mehrere redundante Module vorgesehen, die zyklisch die zugeführten Eingangssignale verarbeiten und die somit den Charakter von "endlichen Automaten" (finite state machines) aufweisen. Vorzugsweise sind drei redundante Module mit deterministischen Prozessen vorgesehen, denen identische Eingangssignale zugeführt werden. Die Prozesse, die sich voneinander stark unterscheiden können, sollen anhand der Eingangssignale identische Ausgangssignale erzeugen. Durch die Wahl unterschiedlicher Prozesse, gegebenenfalls auch anderer Soft- und Hardwaresysteme kann durch die dadurch resultierende Diversivität eine weitere Erhöhung der Sicherheit erzielt werden. Die Prozesse werden dabei nur dann gestartet, wenn frühere Prozesszyklen korrekt abgeschlossen wurden und neue identische Eingangssignale vorliegen. Die Prozesse in den redundanten Modulen laufen daher vollständig frei. Eine Synchronisation auf Instruktionsebene, z.B. anhand von Interrupts ist nicht vorgesehen. Diese Synchronisation auf Prozessebene ist mit verschiedenen Vorteilen verbunden. Zur Vermeidung von Problemen, die durch die individuelle zeitliche Steuerung der Arbeitszyklen in den einzelnen Modulen entstehen können (z.B. ein Zurückhängen eines einzelnen Moduls), wird die zeitliche Steuerung in einer vorzugsweisen Ausgestaltung der Erfindung auf die Prozessebene verlegt. Die Einheitlichkeit der zeitlichen Steuerung aller Module wird dadurch garantiert, ohne, dass eine zentrale Steuerung benötigt wird, die aufgrund fehlender Redundanz eine erhöhte Fehlemeigung aufweist (siehe oben: Nachteil der Verwendung eines zentral generierten Systemtaktes).

Die Erfindung wird nachfolgend anhand einer Zeichnung beispielsweise näher erläutert. Dabei zeigt:
- Fig. 1: die Arbeitszyklen von drei redundanten Modulen, welche die zugeführten Daten unabhängig voneinander innerhalb von n sequentiell durchlaufenen Zuständen verarbeiten,
- Fig. 2: den zeitlichen Verlauf der letzten drei Zustände eines normal verlaufenden Zyklus,
- Fig. 3: den zeitlichen Verlauf der letzten drei Zustände eines fehlerhaft verlaufenden Zyklus,
- Fig. 4: Zustände, die von den einzelnen redundanten Modulen vor dem korrekten Abschluss eines Zyklus eingenommen werden können und
- Fig. 5: eine Verarbeitungsstufe mit drei redundanten Modulen.

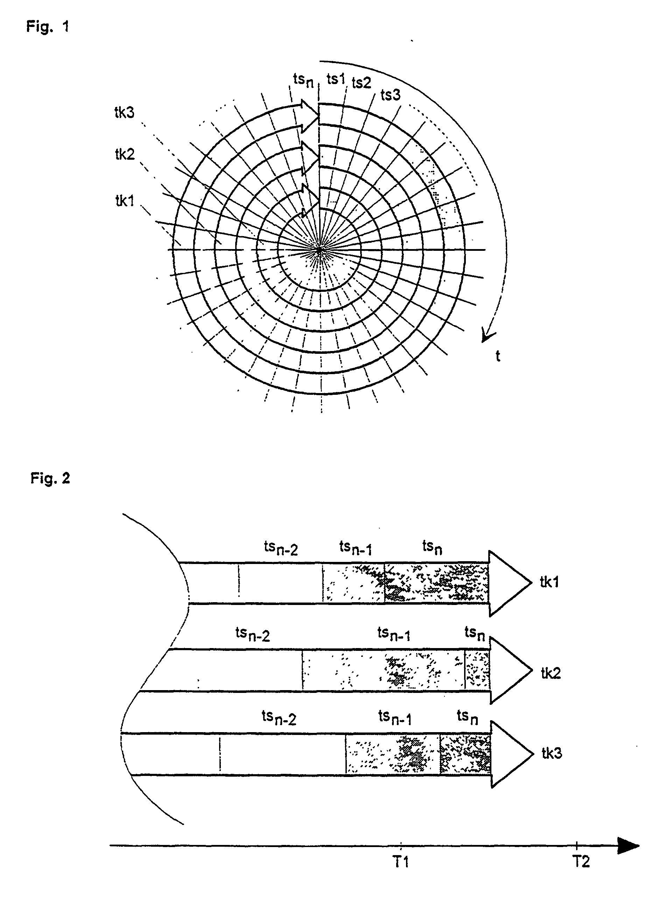

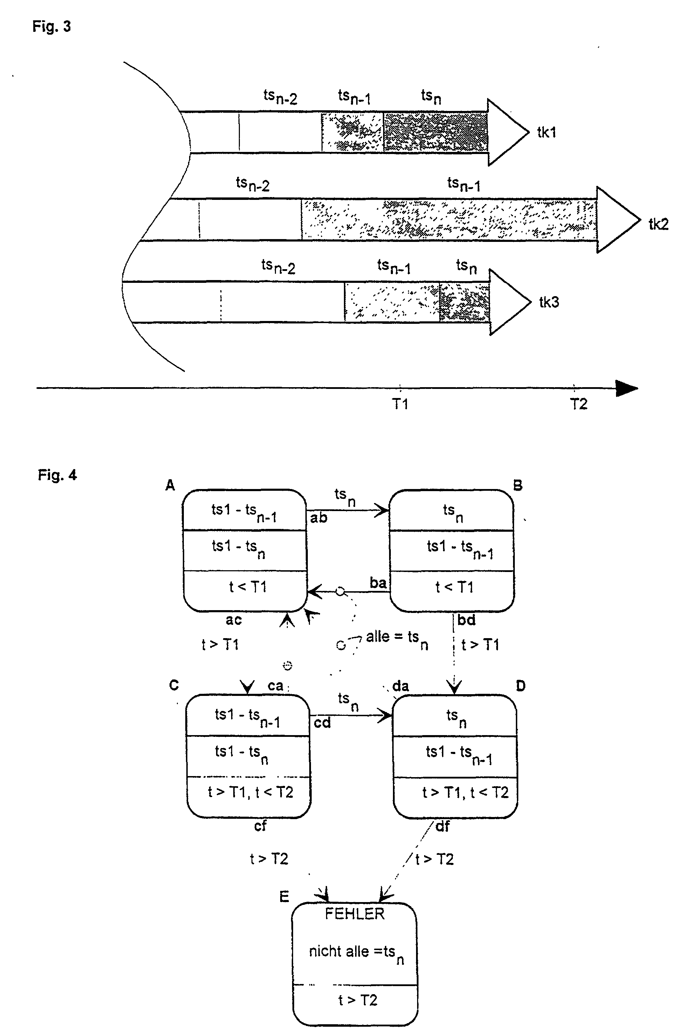

Fig. 1 zeigt die Arbeitszyklen tk1, tk2 und tk3 von drei redundanten Modulen, welche die zugeführten Daten unabhängig voneinander innerhalb von n sequentiell durchlaufenen Zuständen ts1, ..., tsₙ verarbeiten. Die Arbeitszyklen tk1, tk2 und tk3, die asynchron mit eigener Taktgeschwindigkeit laufen, werden nach Zyklusende und vor (oder mit) Zyklusstart synchronisiert. Die Arbeitszyklen tk1, tk2 und tk3 der drei redundanten Module verlaufen daher nicht in Echtzeit, wie in Fig. 1 idealisiert gezeigt. Nimmt man den Beginn der durchlaufenen Zustände ts1, ..., tsₙ als zeitliches Mass, so ist feststellbar, dass die virtuellen Zeiten der redundanten Module normalerweise voneinander und von der Echtzeit abweichen, wie dies in Fig. 2 und Fig. 3 gezeigt ist. Verursacht werden diese Abweichungen durch unterschiedlich langes Verweilen in den einzelnen Zuständen.

In den redundanten Modulen können auch verschiedene Prozesse gefahren werden, die zur Lösung derselben Aufgabe vorgesehen sind. Diese verschiedenen Prozesse, die nach Zyklusstart bis Zyklusabschluss frei laufen, sind ebenfalls endliche Automaten, die pro Arbeitszyklus die gleiche oder eine unterschiedliche Zahl n bzw. x,y,z von Zuständen sequentiell durchlaufen. Für jeden Prozess kann die Software und die Rechnerarchitektur individuell gewählt werden, soweit es die Rahmenbedingungen erlauben (die Prozesse haben ein deterministisches Verhalten und liefern für untereinander gleiche Eingangssignale solange kein Fehler auftritt stets untereinander gleiche Ausgangssignale).

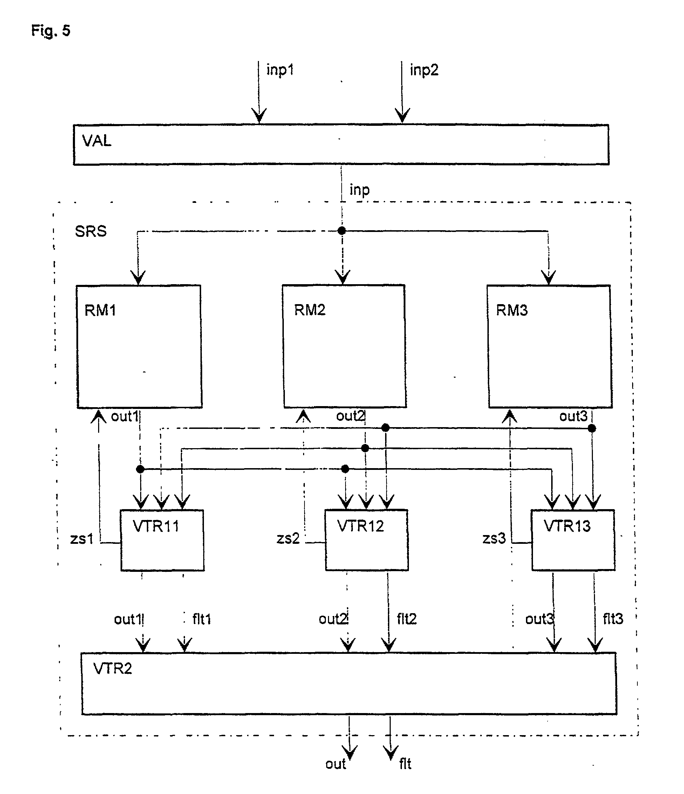

Vor jedem Zyklusstart müssen den redundanten Modulen daher identische Eingangssignale zugeführt werden. Dazu werden mehrere redundante Eingangssignale, die von einem oder mehreren Sensoren stammen, vorzugsweise geprüft und abgeglichen, wie dies in [3] (siehe z.B. die Zusammenfassung) beschrieben ist. Zusätzlich zu einem Werteabgleich z.B. durch Mittelwertbildung kann auch ein Abgleich der zugehörigen Zeitinformation erfolgen, die jedem der redundanten Eingangssignale gegebenenfalls aufgeprägt wird. Falls z.B. ein erstes Eingangssignal mit dem Wert a zu einem Zeitpunkt t1 und ein zweites Eingangssignal mit dem Wert b zu einem Zeitpunkt t2 eintrifft, erfolgt der Abgleich z.B. derart, dass an die redundanten Module ein validiertes Signal mit dem Wert (a+b)/2 und dem Zeitstempel (t1+t2)/2 abgegeben wird. In Fig. 5 ist den redundanten Modulen RM1, RM2 und RM3 dazu eine Abgleichstufe VAL vorgeschaltet, der zwei Eingangssignale inp1 und inp2 zugeführt werden.

Für jeden Arbeitszyklus tk1; tk2 bzw. tk3 wird eine zulässige Zykluszeit bzw. ein Zeitrahmen vorgesehen. Dadurch kann festgestellt werden, ob eines der redundanten Module innerhalb eines Arbeitszyklus tk1; tk2 bzw. tk3 ausgefallen ist. Vorzugsweise werden zwei Zeitrahmen festgelegt, die zu Zeitpunkten T1 bzw. T2 jeweils abgeschlossen sind. T1 ist der Zeitpunkt, in dessen Bereich normalerweise der Abschluss des Arbeitszyklus tk1; tk2 bzw. tk3 liegt. Nach dem Zeitpunkt T2 wird angenommen, dass bei einem noch nicht beendeten Arbeitszyklus tk1; tk2 bzw. tk3 bzw. einem der parallel laufenden Prozesse ein Fehler aufgetreten ist.

Fig. 5 zeigt eine im Arbeitspfad eines Rechnersystems angeordnete sicherheitstolerante Verarbeitungsstufe SRS mit drei parallel zueinander geschalteten redundanten Modulen RM1, RM2 und RM3, denen ein Eingangssignal inp zugeführt wird. Die Ausgangssignale out1, out2 und out3 der redundanten Module RM1, RM2 und RM3 werden je einem ersten Voter VTR11, VTR12 bzw. VTR13 zugesandt, in dem festgestellt wird, ob die Arbeitszyklen tk1, tk2 und tk3 im zugeordneten und den benachbarten redundanten Modulen RM1, RM2 und RM3 innerhalb den vorgesehenen, durch T1 und T2 begrenzten Zeitrahmen abgeschlossen wurden. Sofern innerhalb den vorgesehenen Zeitrahmen die Ergebnisse aller Arbeitszyklen tk1, tk2 und tk3 vorliegen, wird vorzugsweise von jedem Voter VTR11, VTR12 bzw. VTR13 ein Startsignal zs1, zs2 bzw. zs3 zu den redundanten Modulen RM1, RM2 und RM3 übertragen, wonach die Arbeitszyklen tk1, tk2 und tk3 erneut gestartet und weitere Eingangssignale inp verarbeitet werden. Sofern bis zum Abschluss des durch den Zeitpunkt T2 von einem der redundanten Module RM1, RM2 und RM3 kein Ausgangssignal out1, out2 bzw. out3 eingetroffen ist, wird von jedem Voter VTR11, VTR12 bzw. VTR13 eine entsprechende Fehlermeldung flt1, flt2 bzw. flt3 abgegeben. Gegebenenfalls werden nur diejenigen redundanten Module RM1; RM2 bzw. RM3 wieder gestartet, die ein Ausgangssignal out1; out2 bzw. out3 abgegeben haben.

Die Ausgangssignale out1, out2 und out3 werden ferner direkt oder indirekt über die ersten Voter VTR11, VTR12 bzw. VTR13 einem zweiten Voter VTR2 zugeführt, der feststellt, ob wenigstens zwei von den drei Ausgangssignalen out1; out2 bzw. out3 übereinstimmen und ein entsprechendes Ausgangssignal out abgibt. In einer vorzugsweisen Ausgestaltung werden die Startsignale zs1, zs2 bzw. zs3 erst nach vollständiger Prüfung durch die ersten und den zweiten Voter VTR11, VTR12, VTR13 bzw. VTR2 vorzugsweise direkt vom zweiten Voter VTR2 an die redundanten Module RM1, RM2 und RM3 übertragen. Durch das Signal flt meldet der zweite Voter VTR2 gegebenenfalls aufgetretene Fehler, wonach Korrekturmassnahmen eingeleitet werden können, wie sie in [1], Spalte 17, Zeilen 39 - 53 beschrieben sind. Beim Ausfall eines redundanten Moduls RM1; RM2 bzw. RM3 werden die Arbeitszyklen tk1, tk2 und tk3 der zwei korrekt arbeitenden redundanten Module RM1, RM2; RM1, RM3 bzw. RM2, RM3 nach Abschluss eines Arbeitszyklus angehalten und die aktuellen Daten aller Module, die innerhalb eines Arbeitszyklus tk1, tk2 und tk3 aufgerufen werden, an die entsprechenden Module des ausgefallenen redundanten Moduls RM1; RM2 bzw. RM3 übertragen werden, wonach diese beginnend mit einem neuen Arbeitszyklus tk1, tk2 und tk3 wieder gestartet werden. Diese Massnahme erfolgt im wesentlichen in Form eines Transfers der in einem Speicherbereich abgelegten Daten (Memory dump) von einem der funktionierenden Module RM1; RM2 bzw. RM3 an das ausgefallene Modul. Ferner können die Speicherbereiche aller Module durch die korrekten Daten überschrieben werden.

Vorzugsweise werden alle Arbeitszyklen tk1, tk2 und tk3 auch vor dem Herunterfahren des Rechnersystems beendet und die vorhandenen Daten abgelegt, wonach das Rechnersystem abgeschaltet und kontrolliert wieder aufgefahren werden kann.

Die Funktionen der Voter VTR11, VTR12, VTR13 und VTR2 können durch fachmännische Massnahmen beliebig zusammengefasst werden.

Fig. 4 zeigt die Zustände A, B, C, D und E, die in den ersten Votern VTR11, VTR12, VTR13 vorzugsweise vorgesehen sind und die in Abhängigkeit des Verlaufs der Arbeitszyklen tk1, tk2 und tk3 innerhalb der vorgesehenen Zeitrahmen auftreten. Der erste durch den ersten Zeitpunkt T1 begrenzte Zeitrahmen ist entsprechend der durchschnittlich erwarteten und der zweite durch den zweiten Zeitpunkt T2 begrenzte Zeitrahmen ist entsprechend der maximal zulässigen Zykluszeit festgelegt. Wie eingangs erwähnt, durchlaufen die Arbeitszyklen tk1, tk2 und tk3 innerhalb eines Zyklus sequentiell n Zustände ts1, ..., tsₙ. Nach dem Start eines Zyklus befinden sich die Voter VTR11, VTR12, VTR13 innerhalb des ersten Zeitrahmens (t<T1) solange im Zustand A bis der zugehörige Arbeitszyklus tk1; tk2 bzw. tk3 den letzten Zustand tsₙ erreicht hat. Falls im Zustand A der zugehörige Arbeitszyklus tk1; tk2 bzw. tk3 innerhalb des ersten Zeitrahmens (t<T1) den letzten Zustand tsₙ erreicht, erfolgt ein Übergang (ab) in den Zustand B, ansonsten erfolgt ein Übergang (ac) in den Zustand C (t>T1, t<T2).

Falls im Zustand B die parallel geführten Arbeitszyklen tk1; tk2 bzw. tk3 innerhalb des ersten Zeitrahmens (t<T1) den letzten Zustand tsₙ erreichen, erfolgt ein Übergang (ba) in den Zustand A mit einem Start des nächsten Zyklus; ansonsten erfolgt ein Übergang (bd) in den Zustand D (t>T1, t<T2).

Falls im Zustand C alle Arbeitszyklen tk1; tk2 bzw. tk3 innerhalb des zweiten Zeitrahmens (t>T1, t<T2) den letzten Zustand tsₙ erreichen, erfolgt ein Übergang (ba) in den Zustand A mit einem Start des nächsten Zyklus; ansonsten erfolgt ein Übergang (ce) in den "Fehlerzustand" E (t>T2). Falls im Zustand C der zugehörige Arbeitszyklus tk1; tk2 bzw. tk3 innerhalb des zweiten Zeitrahmens (t>T1, t<T2) den letzten Zustand tsₙ erreicht, erfolgt ein Übergang (cd) in den Zustand D.

Falls im Zustand D die parallel geführten Arbeitszyklen tk1; tk2 bzw. tk3 innerhalb des zweiten Zeitrahmens (t>T1, t<T2) den letzten Zustand tsₙ erreichen, erfolgt ein Übergang (da) in den Zustand A mit einem Start des nächsten Zyklus; ansonsten erfolgt ein Übergang (de) in den "Fehlerzustand" E (t>T2). In einem Auswertemodul (z.B. im zweiten Voter VTR2) kann daher die Fehlerquelle festgestellt werden.

Falls während den Arbeitszyklen tk1; tk2 bzw. tk3 durch die parallel laufenden Prozesse eine unterschiedliche Anzahl von Zuständen durchlaufen wird, können auch individuell angepasste Zeitrahmen vorgesehen werden. Für drei parallele Prozesse, die in Arbeitszyklen tk1; tk2 bzw. tk3 frei ablaufen, werden z.B. je zwei Zeitrahmen bzw. Zeitpunkte festgelegt: T1 -> T11, T12, T13 bzw. T2 -> T21, T22, T23.

Bei Rechnersystemen, die im Bereich der Steuerungstechnik eingesetzt werden (z.B. Stellwerkrechner), sind innerhalb der Arbeitszyklen tk1, tk2 und tk3 oft längere Wartezeiten vorgesehen, die den in Echtzeit ablaufenden Steuerungsvorgängen entsprechend bemessen und oft weit über 10⁶ mal länger als die Maschinenzyklen des Rechnersystems sind. Z.B. stellt der Stellwerkrechner eine Weiche in einem Schienennetz, die zum Umlaufen einige Sekunden benötigt. Aus Sicherheitsgründen benötigt der Rechner eine Rückmeldung, mit der die korrekte Ausführung des Befehls bestätigt wird. Nach Abgabe des Stellbefehls wird daher ein Zeitrahmen gesetzt, innerhalb dem die Rückmeldung eintreffen muss. Da die Arbeitszyklen tk1, tk2 und tk3 asynchron je mit einer eigenen Taktgeschwindigkeit laufen, können die Wartezeiten innerhalb jedes Arbeitszyklus tk1; tk2 bzw. tk3 derart hohe Unterschiede aufweisen, dass die resultierende Verschiebung der virtuellen Zeiten zu Verfahrensfehlem führt. Tritt z.B. gegen Ende des Arbeitszyklus tk1; tk2 bzw. tk3 ein Zustand tsₙ, wie in Fig. 3 gezeigt, nicht innerhalb einer vorgesehenen Zeitlimite (vor dem Zeitpunkt T2) auf, wird ein Fehler festgestellt und gemeldet.

Erfindungsgemäss werden daher nicht die Signale der asynchron laufenden Taktgeneratoren der redundanten Module, sondern die Arbeitszyklen tk1, tk2 und tk3 als Referenz zur Messung der Zeitrahmen verwendet. Für den der Umstellung einer Weiche zugeordneten Zeitrahmen können z.B. 150 Arbeitszyklen tk1, tk2 und tk3 vorgesehen werden. Nach Abgabe eines Stellbefehls wird nun eine Variable X auf 150 gesetzt und bei jedem Arbeitszyklus tk1; tk2 bzw. tk3 dekrementiert. Gleichzeitig wird geprüft, ob vom Stellorgan oder einem zugehörigen Messfühler eine Rückmeldung eintrifft. Sofern die Variable X den Wert null annimmt, bevor die Rückmeldung eintrifft, wird ein Fehler registriert. Da die Arbeitszyklen tk1, tk2 und tk3 pro Zyklus wenigstens einmal aufeinander abgestimmt werden, weichen die Zeitrahmen jeweils nur geringfügig voneinander. Fehler, die bei grösseren gegenseitigen Abweichungen der in den Arbeitszyklen tk1, tk2 und tk3 vorgesehenen Zeitrahmen auftreten können, werden somit vermieden. Zu berücksichtigen ist, dass die Arbeitszyklen tk1, tk2 und tk3 von den Eingangssignalen abhängen und somit normalerweise von Zyklus zu Zyklus ändern. Zur Berechnung der Zeitrahmen wird daher ein geschätzter Durchschnittswert verwendet.

Zur Erhöhung der Unabhängigkeit von Vorrichtungen, die zur zeitlichen Steuerung der Prozesse vorgesehen sind, kann ein neuer Arbeitszyklus tk1; tk2 bzw. tk3 direkt oder indirekt auch durch den Voter VTR2 nach positivem Abschluss des Vergleichs der Ausgangssignale out1, out2, out3 angestossen werden. Durch die Signale zs1, zs2, zs3 können die redundanten Module RM1, RM2 und RM3 und z.B. in den Votem VTR11, VTR12, VTR13 enthaltene Timer, durch die die Zeitrahmen T1, T2 festgelegt sind, neu gestartet werden. Timerfunktionen können daher in den Votem VTR11, VTR12, VTR13 undloder VTR2 oder auch in externen Timermodulen vorgesehen sein.

Für jeden Arbeitszyklus tk1: tk2 bzw. tk3 können mehrere Zeitrahmen unterschiedlicher Länge (1 - m Zyklen) verwendet werden. Damit die gewünschte Länge jedes Zeitrahmens genügend genau eingestellt werden kann, sollen die Arbeitszyklen tk1, tk2 und tk3 im Verhältnis zur Länge der vorgesehenen Wartezeit genügend kurz sein. Unter Berücksichtigung der relativ langsamen Stellvorgänge kann dies bei den meisten Steuerungsanlagen problemlos erreicht werden.

Die redundanten Modulen RM1, RM2 und RM3 und die Abgleichstufe VAL können Software- aber auch Hardwaremodule, z.B. mehrere parallel geschaltete Prozessoren sein (siehe z.B. Fig. 1 von [4].

Literaturverzeichnis:
[1] U.S. Pat. No. 5,388,242
[2] I. Smith, The Fault-Tolerant Multiprocessor Computer, Noyes Publications New Jersey 1986
[3] U.S. Pat. No. 5,710,776
[4] U.S. Pat. No. 4,733,353
[5]DE 24 15 307 A

## Patentansprüche

1. Verfahren zur sicheren Datenverarbeitung in einem Rechnersystem mit redundanten Modulen (RM1, RM, RM3), die mit einer Abgleichstufe (VAL) verbunden sind, wobei der Abgleichstufe (VAL) zugeführte Eingangssignale (inp1, inp2)
- zu identischen Eingangssignalen (inp) abgeglichen werden,
- parallel während asynchronen Arbeitszyklen (tk1; tk2 bzw. tk3) den redundanten Modulen (RM1, RM, RM3) zugeführt werden und
- in den redundanten Modulen (RM1, RM, RM3) durch deterministische Prozesse verarbeitet werden, **dadurch gekennzeichnet**, dass die Dauer der Arbeitszyklen (tk1; tk2 bzw. tk3) der freilaufenden deterministischen Prozesse überwacht wird, um den Zustand eines Arbeitszyklus festzustellen wobei diese Prozesse jeweils neu gestartet werden
- bei einem Systemstart,
- nach dem Abschluss eines vorangegangenen Arbeitszyklus (tk1; tk2 bzw. tk3) oder
- beim Vorliegen neuer abgeglichener Eingangssignale (inp).

2. Verfahren nach Anspruch 1, **dadurch gekennzeichnet**, dass die Eingangssignale (inp1, inp2) in der Abgleichstufe (VAL) mit einer Zeitinformation versehen werden.

3. Verfahren nach Anspruch 1 oder 2, **dadurch gekennzeichnet**, dass die Abgleichstufe (VAL) den redundanten Modulen (RM1, RM, RM3) validierte Eingangsignale (inp) übergibt.

4. Verfahren nach einem der Ansprüche 1 bis 3, **dadurch gekennzeichnet**, dass die parallel in den redundanten Modulen (RM1, RM, RM3) ablaufenden Prozesse eine ungleiche Anzahl von Zuständen durchlaufen oder dass diese Prozesse auf verschiedenartigen Rechnersystemen ablaufen und/oder auf verschiedenen Rechnerprogrammen beruhen.

5. Verfahren nach einem der Ansprüche 1 bis 4, **dadurch gekennzeichnet**, dass die Überwachung eines Arbeitszyklus (tk1; tk2 bzw. tk3) über dessen Dauer erfolgt, die durch einen Zeitrahmen festgelegt ist, der über einen ersten Zeitpunkt T1 entsprechend der durchschnittlich erwarteten und einen zweiten Zeitpunkt T2 entsprechend der maximal zulässigen Zykluszeit festgelegt wird und dass geprüft wird, ob alle Module (RM1, RM, RM3) ein Ausgangssignal (out1, out2, out3) abgeben.

6. Verfahren nach Anspruch 5, **dadurch gekennzeichnet**, dass geprüft wird, ob alle Arbeitszyklen (tk1; tk2 bzw. tk3) innerhalb eines ersten durch den Zeitpunkt T1 oder eines zweiten durch die Zeitpunkte T1 und T2 definierten Zeitrahmens den letzten Zustand erreichen.

7. Verfahren nach Anspruch 5 oder 6, dadurch gekennzeichnet, dass nur die Prozesse in jenen Modulen neu gestartet werden, die innerhalb des festgelegten Zeitrahmens ein Ausgangssignal (out1, out2, out3) erzeugt haben.

8. Verfahren nach einem der Ansprüche 5 bis 7 **dadurch gekennzeichnet**, dass die Ausgangssignale (out1, out2, out3) wenigstens einer Vergleichsschaltung (VTR11, VTR12, VTR13, VTR2) zugeführt werden, durch die die Übereinstimmung und das rechtzeitige Eintreffen der Ausgangssignale (out1, out2, out3) geprüft wird.

9. Verfahren nach einem der Ansprüche 1 bis 8, **dadurch gekennzeichnet**, dass die Arbeitszyklen (tk1; tk2 bzw. tk3) jeweils nach Abschluss des vorhergehenden Arbeitszyklus (tk1; tk2 bzw. tk3) durch einen externen Taktgeber neu gestartet werden.

10. Rechnersystem zur sicheren Datenverarbeitung mit redundanten Modulen (RM1, RM, RM3), die mit einer Abgleichstufe (VAL) verbunden sind, wobei der Abgleichstufe (VAL) zugeführte Eingangssignale (inp1, inp2)
- zu identischen Eingangssignale (inp) abgeglichen werden,
- parallel während asynchronen Arbeitszyklen (tk1; tk2 bzw. tk3) den redundanten Modulen (RM1, RM, RM3) zuführbar sind und
- in den redundanten Modulen durch deterministische Prozesse verarbeitbar sind,
**dadurch gekennzeichnet,**
dass Mittel zur Überwachung der Dauer der Arbeitszyklen (tk1; tk2 bzw. tk3) der frei laufenden Prozesse vorgesehen sind um den Zustand eines Arbeitszyklus festzustellen, und dass diese Prozesse jeweils neu startbar sind
- bei einem Systemstart,
- nach dem Abschluss eines vorangegangenen Arbeitszyklus (tk1; tk2 bzw. tk3) oder
- beim Vorliegen neuer abgeglichener Eingangssignale (inp).

11. Rechnersystem nach Anspruch 10, **dadurch gekennzeichnet**, dass die deterministischen Prozesse in den redundanten Module (RM1, RM, RM3)
- eine ungleiche Anzahl von Zuständen aufweisen,
- auf verschiedenartigen Rechnersystemen ablaufen, und/oder
- auf verschiedenen Rechnerprogrammen beruhen.

12. Rechnersystem nach Anspruch 10 oder 11, **dadurch gekennzeichnet**, dass den redundanten Modulen (RM1, RM2 und RM3) wenigstens eine Vergleichsschaltung (VTR11, VTR12, VTR13, VTR2) nachgeordnet, mittels die Übereinstimmung und das rechtzeitige Eintreffen der Ausgangssignale (out1, out2, out3) überprüfbar ist.

## Claims

1. Method for secure data processing in a computer system with redundant modules (RM1, RM, RM3) which are connected to an alignment stage VAL, where input signals (inp1, inp2) supplied to the alignment stage VAL
- are aligned to form identical input signals (inp),
- are supplied in parallel during asynchronous work cycles (tk1; tk2 or tk3) to the redundant modules (RM1, RM, RM3) and
- are processed in the redundant modules (RM1, RM, RM3) by means of deterministic processes,
**characterised in that** the duration of the work cycles (tk1; tk2 or tk3) of the freely running deterministic processes is monitored in order to determine the state of a work cycle, whereby these processes are in each case restarted
- in the event of a system start,
- after completion of a preceding work cycle (tk1; tk2 or tk3) or
- when new, aligned input signals (inp) are present.

2. Method in accordance with Claim 1, **characterised in that** the input signals (inp1, inp2) are provided with time information in the alignment stage VAL.

3. Method in accordance with Claim 1 or 2, **characterised in that** the alignment stage VAL transfers validated input signals (inp) to the redundant modules (RM1, RM, RM3).

4. Method in accordance with one of Claims 1 to 3, **characterised in that** the processes running in parallel in the redundant modules (RM1, RM, RM3) pass through an unequal number of states, or that these processes run on different types of computer systems and/or are based on different computer programs.

5. Method in accordance with one of Claims 1 to 4, **characterised in that** the monitoring of a work cycle (tk1; tk2 or tk3) is effected by way of its duration which is defined by means of a time frame which itself is defined by way of a first point in time T1 corresponding to the average expected cycle time and a second point in time T2 corresponding to the maximum permitted cycle time, and that a check is performed to ascertain whether all the modules (RM1, RM, RM3) issue an output signal (out1, out2, out3).

6. Method in accordance with Claim 5, characterised in that a check is performed to ascertain whether all work cycles (tk1; tk2 or tk3) within a first time frame defined by the point in time T1 or within a second time frame defined by the points in time T1 and T2 reach the last state.

7. Method in accordance with Claim 5 or 6, **characterised in that** only the processes are restarted in those modules which have generated an output signal (out1, out2, out3) within the defined time frame.

8. Method in accordance with one of Claims 5 to 7, **characterised in that** the output signals (out1, out2, out3) are supplied to at least one comparison circuit (VTR11, VTR12, VTR13, VTR2) which serves to check that the output signals (out1, out2, out3) are matching and have been received punctually.

9. Method in accordance with one of Claims 1 to 8, **characterised in that** the work cycles (tk1; tk2 or tk3) are restarted in each case after completion of the preceding work cycle (tk1; tk2 or tk3) by means of an external clock generator.

10. Computer system for secure data processing with redundant modules (RM1, RM and RM3) which are connected to an alignment stage VAL, whereby input signals (inp1, inp2) supplied to the alignment stage VAL
- are aligned to form identical input signals (inp),
- can be fed in parallel during asynchronous work cycles (tk1; tk2 or tk3) to the redundant modules (RM1, RM, RM3) and
- can be processed in the redundant modules by means of deterministic processes,
**characterised in that** means are provided for monitoring the duration of the work cycles (tk1; tk2 or tk3) of the freely running processes in order to determine the state of a work cycle, and that these processes can in each case be restarted
- in the event of a system start,
- after completion of a preceding work cycle (tk1; tk2 or tk3) or
- when new, aligned input signals (inp) are present.

11. Computer system in accordance with Claim 10, **characterised in that** the deterministic processes in the redundant modules (RM1, RM and RM3)
- exhibit an unequal number of states,
- run on different types of computer systems, and/or
- are based on different computer programs.

12. Computer system in accordance with Claim 10 or 11, **characterised in that** at least one comparison circuit (VTR11, VTR12, VTR13, VTR2) which serves to check that the output signals (out1, out2, out3) are matching and have been received punctually is configured downstream of the redundant modules (RM1, RM2 and RM3).

## Revendications

1. Procédé pour le traitement sûr de données dans un système informatique ayant des modules redondants (RM1, RM, RM3) qui sont reliés à un étage d'égalisation (VAL), dans lequel on égalise des signaux d'entrée (inp1, inp2) envoyés à l'étage d'égalisation (VAL)
- pour former des signaux d'entrée identiques (inp),
- on les envoie en parallèle aux modules redondants (RM1, RM, RM3) pendant des cycles de travail asynchrones (tk1 ; tk2 ou tk3), et
- on les traite dans les modules redondants (RM1, RM, RM3) au moyen de processus déterministes,
caractérisé par le fait qu'on surveille la durée des cycles de travail (tk1 ; tk2 ou tk3) des processus déterministes s'exécutant librement afin de déterminer l'état d'un cycle de travail, ces processus étant redémarrés à chaque fois
- lors d'un démarrage du système,
- après la fin d'un cycle de travail (tk1 ; tk2 ou tk3) précédent, ou
- en présence de nouveaux signaux d'entrée égalisés (inp).

2. Procédé selon la revendication 1, caractérisé par le fait que, dans l'étage d'égalisation (VAL), on munit les signaux d'entrée (inp1, inp2) d'une information temporelle.

3. Procédé selon la revendication 1 ou 2, caractérisé par le fait que l'étage d'égalisation (VAL) transmet aux modules redondants (RM1, RM, RM3) des signaux d'entrée (inp) validés.

4. Procédé selon l'une des revendications 1 à 3, caractérisé par le fait que les processus s'exécutant en parallèle dans les modules redondants (RM1, RM, RM3) passent par un nombre différent d'états ou que ces processus s'exécutent sur des systèmes informatiques de différents types et/ou reposent sur des programmes informatiques différents.

5. Procédé selon l'une des revendications 1 à 4, caractérisé par le fait que la surveillance d'un cycle de travail (tk1 ; tk2 ou tk3) s'effectue sur une durée de celui-ci qui est fixée par un créneau temporel, qui est lui-même fixé par un premier instant T1 correspondant au temps de cycle attendu en moyenne et par un deuxième instant T2 correspondant au temps de cycle maximal autorisé, et qu'on teste si tous les modules (RM1, RM, RM3) délivrent un signal de sortie (out1, out2, out3).

6. Procédé selon la revendication 5, caractérisé par le fait qu'on teste si tous les cycles de travail (tk1 ; tk2 ou tk3) atteignent le dernier état pendant un premier créneau temporel défini par l'instant T1 ou pendant un deuxième créneau temporel défini par les instants T1 et T2.

7. Procédé selon la revendication 5 ou 6, caractérisé par le fait qu'on ne redémarre que les processus dans ceux des modules qui ont produit un signal de sortie (out1, out2, out3) pendant le créneau temporel fixé.

8. Procédé selon l'une des revendications 5 à 7, caractérisé par le fait qu'on envoie les signaux de sortie (out1, out2, out3) au moins à un circuit comparateur (VTR11, VTR12, VTR13, VTR2) au moyen duquel on teste si les signaux de sortie (out1, out2, out3) coïncident et arrivent assez tôt.

9. Procédé selon l'une des revendications 1 à 8, caractérisé par le fait qu'on redémarre les cycles de travail (tk1 ; tk2 ou tk3) à chaque fois après la fin du cycle de travail (tk1 ; tk2 ou tk3) précédent au moyen d'un générateur de cadence externe.

10. Système informatique pour le traitement sûr de données ayant des modules redondants (RM1, RM, RM3) qui sont reliés à un étage d'égalisation (VAL), dans lequel des signaux d'entrée (inp1, inp2) envoyés à l'étage d'égalisation (VAL)
- sont égalisés pour former des signaux d'entrée identiques (inp),
- peuvent être envoyés en parallèle aux modules redondants (RM1, RM, RM3) pendant des cycles de travail asynchrones (tk1 ; tk2 ou tk3)
- et peuvent être traités dans les modules redondants au moyen de processus déterministes,
caractérisé par le fait que
des moyens sont prévus pour surveiller la durée des cycles de travail (tk1 ; tk2 ou tk3) des processus s'exécutant librement afin de déterminer l'état d'un cycle de travail et que les processus déterministes peuvent être redémarrés à chaque fois
- lors d'un démarrage du système,
- après la fin d'un cycle de travail (tk1 ; tk2 ou tk3) précédent ou
- en présence de nouveaux signaux d'entrée égalisés (inp).

11. Système informatique selon la revendication 10, caractérisé par le fait que les processus déterministes dans les modules redondants (RM1, RM, RM3)
- ont un nombre différent d'états,
- s'exécutent sur des systèmes informatiques de différents types, et/ou
- reposent sur des programmes informatiques différents.

12. Système informatique selon la revendication 10 ou 11, caractérisé par le fait qu'il est branché du côté aval des modules redondants (RM1, RM et RM3) au moins un circuit comparateur (VTR11, VTR12, VTR13, VTR2) au moyen duquel on peut tester si les signaux de sortie (out1, out2, out3) coïncident et arrivent assez tôt.
